# EUROPEAN PATENT APPLICATION

(11) **EP 3 266 805 A1**
(43) Date of publication of application: **10.01.2018**
(21) Application number: 16305865.4
(22) Date of filing: 08.07.2016
(51) Int. Cl.: C08G 63/06, C08G 63/60, C09D 167/08

(54) **POLYESTER AS REACTIVE DILUENT**

(71) Applicant: Oleon N.V., 9940 Ertvelde (BE)
(72) Inventor: DE RIDDER, Dennis, 2390 MALLE (BE); KERBRAT, Marion, 60280 MARGNY-LES-COMPIEGNE (FR); PACKET, Dirk, 3110 ROTSELAAR (BE); ZITOUNI, Karima, 91420 MORANGIS (FR)
(74) Representative: Santarelli

(57) **Abstract**

The present invention relates to a polyester obtainable by esterification of a polyol with an hydroxy acid and a fatty acid, a process of preparation and use thereof. In particular, the polyester according to the invention can be used as a reactive diluent in a composition comprising an alkyd resin, such as a coating composition.

## Description

The present invention relates to the field of coating compositions and more specifically to the reactive diluents used therein. In particular, the present invention concerns reactive diluents that can be used in combination with an alkyd resin to prepare a coating composition, such as paints, varnishes and lacquers.

Coating compositions based on alkyd resins are well-known for their ease of applicability on a wide variety of substrates, their good adhesion properties and their esthetical properties. Consequently, alkyd resin based compositions represent an important part of the coating industry.

Alkyd resin based composition usually comprises large quantity of solvents. These solvents are required to spread the film of composition on the substrate. Moreover, the alkyd resin based composition forms a solid polymeric film when drying. This drying is a two-step process: first the solvent is evaporated and then the resin molecules bond to each other, this reaction being initiated by contact with oxygen from the air. This drying process thus implies the use of VOC ("volatile organic compound") solvents. Typical VOC solvents are aliphatic hydrocarbons (such as white spirit), ethyl acetate, glycol ethers or acetone.

The use of VOC solvents is harmful to people's health and to the environment. Many states have legally defined the terms VOC and tried to prevent and reduce the effect of their emission in the environment, such as into air or water. In Europe (and for the purpose of the present invention), VOC is defined as any organic compound having an initial boiling point less than or equal to 250°C measured at a standard pressure of 101,3kPa. More specifically, European Directive 2004/42/CE further limits the emission of VOC due to the use of organic solvents in certain paints and varnishes. Similar legislations exist in others regions.

Additionally the use of solvents like white spirit implicates the use of lots of hazard labels, which could scare potential customers.

Accordingly, there is a strong incentive to reduce the VOC emission of alkyd resin based compositions.

The problem of the VOC solvent use has many possible solutions.

One of them is leaving out the VOC solvent but putting the resin in emulsion in water. This solution makes use of emulsifiers and rheological thickeners. These two additives reduce significantly the film properties of the alkyd paint.

Another possibility is increasing the oil length of the resin, which results in a composition having more, smaller resin molecules with a higher concentration of reactive fatty acids. This also reduces film properties and complicates the drying process. The resin itself will be less viscous, so less solvent is needed to get the wanted viscosity.

A third option is the use of a molecule that (i) reduces the viscosity of the paint, (ii) is not a VOC and (iii) should react in the same way as the resin while curing i.e. this molecule is incorporated in the polymerized film of the composition when it has dried. This molecule is what is usually named as reactive diluent.

However, a reactive diluent always reduce the properties of the polymerized film as it introduces small molecules in the polymerized film that change the structure of the cured resin.

The work of the inventors has allowed preparing a polyester, that can be used as a reactive diluent which meet the above requirements, without significantly reducing the polymerized film properties.

The present invention thus relates to a polyester obtainable by esterification of a polyol with:
a) an hydroxy acid, and
b) a fatty acid.

The polyester according to the invention can be used as a reactive diluent in coating composition. Since it has a VOC content of 0%, it is possible to drastically limit the VOC content of the coating composition.

By "VOC content" of a product, it is intended the mass of volatile organic compounds, expressed in grams/liter (g/l), in the formulation of the product in its ready-to-use condition. In particular, the mass of volatile organic compounds in the product which react chemically during drying to form part of the coating shall not be considered part of the VOC content.

The polyester according to the invention doesn't reduce the good film properties of the coating composition by more than 30% for the drying time and by more than 25% for the film hardness compared to the standard coating composition comprising VOC solvent (see Examples 5 and 6).

Moreover, the polyester according to the invention is stable at room temperature and is able to at least replace 50% of the used VOC solvent in a coating composition without affecting the polymerized film properties.

In the esterification process, the polyol reacts first with the hydroxy acid and second with the fatty acid.

More particularly, the polyester is obtainable by:
- reacting a polyol with an hydroxy acid to produce an hydroxylated polyester, and
- reacting the resulting hydroxylated polyester with a fatty acid.

The polyol is advantageously a sugar alcohol (such as glycerol, sorbitol, mannitol, xylitol, erythritol, adonitol, arabitol, galactitol, isomalt, lactitol, maltitol), polymerized glycerol, pentaerythritol, dipentaerythritol, tripentaerythritol, trimethylolpropane and polymerized trimethylolpropane, and mixtures thereof.

Preferably, the polyol is a renewable polyol such as sugar alcohol.

In particular, the polyol may not be a saccharide or a diol.

More preferably, the polyol is selected from the group consisting of sorbitol, mannitol, xylitol and mixture thereof.

The hydroxy acid can be a polyhydroxy acid and is advantageously a short (poly)hydroxy acid.

By "short (poly)hydroxy acid", it is intended a carboxylic acid of formula R-COOH, wherein R is an alkyl comprising from 1 to 5 carbon atoms or a phenyl, said alkyl or phenyl being substituted by at least one hydroxy.

Preferably, the short (poly)hydroxy acid is selected from the group consisting of glycolic acid, gluconic acid, hydroxyl benzoic acids, lactic acid, hydroxyl butyric acid, glyceric acid, hydroxyvaleric acid and mixtures thereof.

More preferably, the short (poly)hydroxy acid is selected from the group consisting of glycolic acid, lactic acid, and mixtures thereof.

Preferably, the molar ratio hydroxy acid/polyol is larger than 1, more preferably, comprised between 1 and 10, still more preferably, between 3 and 8. This ensures the fact that all hydroxy functions of the polyol have reacted with an hydroxy acid.

The fatty acid is advantageously an unsaturated fatty acid and preferably a polyunsaturated fatty acid.

More preferably, the fatty acid is a mixture of fatty acids, comprising at least an unsaturated or a polyunsaturated fatty acid.

The mixture of fatty acids comprises no more than 20% of saturated fatty acids, preferably no more than 10% and if possible no more than 4%.

All the percentages in the present application are weight percentages unless otherwise indicated.

It should be noted that throughout the present application, ranges are intended to include the limits.

Advantageously, the mixture of fatty acids comprises at least 18% of linoleic acid, preferably at least 25%, more preferably at least 25% of linoleic acid and still more preferably at least 50%.

Moreover, the mixture of fatty acids may comprise up to 20% of reactive fatty acids.

By "reactive fatty acid", it is intended a conjugated fatty acid(s) and/or a linolenic fatty acid. These reactive fatty acids allow improving drying time.

Preferably, the mixture of fatty acids may comprise from 0 to 5% of conjugated fatty acid(s) and/or from 0 to 15% of linolenic fatty acid.

Higher concentration of these reactive fatty acids should be avoided since it results in dimer formation and gives lower film hardness in the final application as a coating.

More preferably, the fatty acid(s) is/are selected from the group consisting of soy oil fatty acids, tall oil fatty acids, sunflower oil fatty acids, safflower oil fatty acids, linseed oil fatty acids, conjugated sunflower oil fatty acids, calendula oil fatty acids, veronia oil fatty acids, rapeseed oil fatty acids, peanut oil fatty acids, tung oil fatty acids, sardine oil fatty acids, herring oil fatty acids, sesame oil fatty acids, tallow oil fatty acids, cottonseed oil fatty acids and mixtures thereof.

More preferably, the fatty acid is soy oil fatty acids, sunflower oil fatty acids and/or tall oil fatty acids.

The polyester according to the invention has a viscosity, at 25°C of less than 1 Pa.s, preferably less than 0.5Pa.s, more preferably less than 0.35Pa.s. Still more preferably, the polyester according to the invention has a viscosity at 25°C comprised between 0.25 and 0.35Pa.s. The viscosity is measured at a temperature of 25°C at atmospheric pressure.

The polyester according to the invention also presents one or more of the following features:
- it has an hydroxyl value of less than 100mgKOH/g, preferably less than 25 mgKOH/g and if possible less than 15mgKOH/g;
- it has an acid value of less than 10mgKOH/g, preferably less than 5 mgKOH/g and more preferably less than 3 mgKOH/g;
- it has an iodine value higher than 80gI₂/100g, preferably higher than 100gI₂/100g, and more preferably comprised between 100 and 120gI₂/100g.

Advantageously, the polyester according to the invention is made out of renewable resources.

The present invention also relates to a process for preparing a polyester comprising:
- reacting a polyol with an hydroxy acid and a fatty acid in conditions allowing an esterification.

The polyol, the hydroxy acid and the fatty acid are as mentioned above.

Advantageously, the reaction is conducted under inert atmospheric conditions, such as under nitrogen stream.

In a first embodiment, the esterification is conducted at a reaction temperature from 100 to 250°C, preferably from 150 to 240°C and more preferably from 180 to 230°C, while removing water from the reaction medium to facilitate the movement of the reaction equilibrium towards higher ester conversion.

Usually, the reaction time for the esterification reaction is from 3 to 10 hours.

Advantageously, the process for preparing the polyester comprises a first step of heating the reaction medium at a temperature from 100 to 140°C, more preferably from 110 to 130°C, in order to remove most of the water contained in the reactants of the reaction medium. This can be also conducted under vacuum to help removing water, such as a vacuum of 200mbar.

By reaction medium, it is intended a medium containing at least the polyol and the hydroxy acid.

The temperature of the reaction medium is thus slowly elevated to the reaction temperature such as the temperature mentioned above for the esterification. This elevation of temperature is performed in at least 1h30, preferably at least 3h. This elevation of temperature can be performed before and/or after the addition of the fatty acid. More particularly, this elevation is performed at least after the addition of the fatty acid, and optionally before the addition of the fatty acid.

Once the reaction temperature is reached, it is maintained for at least 1h30, preferably, at least 3h.

In an alternative embodiment, the esterification is conducted at a temperature from 20 to 230°C (preferably from 40 to 200°C, more preferably from 100 to 180°C), in a suitable solvent and/or in presence of a metallic catalyst. Removal of water from the reaction medium can advantageously be conducted by azeotropic distillation.

For this alternative embodiment, examples of suitable solvent are benzene, toluene, xylene, chloroform, dichloromethane, methylene chloride, carbon tetrachloride, linear or branched alkane comprising 5 to 20 carbon atoms, linear or branched alkene comprising 5 to 20 carbon atoms, linear or branched alkyne comprising 5 to 20 carbon atoms, tertiary amines, amides or dimethyl sulfoxide.

Advantageously, the metallic catalyst is selected among the group consisting of stannous oxalate, stannous bis(2-ethylhexanoate), stannous bis(2-neodecanoate), stannous dichloride, monobutyltin dihydroxide chloride, monobutyltin tris (2-ethylhexanoate), dibutyltin diacetate, dibutyltin dioxide, dibutyltin dilaurate, dioctyltin oxide, monobutyltin oxide, monobutyltin hydroxide, butyl stannoic acid, zinc oxalate, zinc acetate, zinc bis (2-ethylhexanoate), zinc oxide, zinc neodecanoate, tetrabutyl titanate and titanium dioxide.

Usually, in these conditions, the reaction time for an esterification is from 3 to 8h.

In a preferred embodiment, the process for preparing the polyester is performed in several steps and comprises at least:
i) a step of reacting a polyol with an hydroxy acid to produce an hydroxylated polyester, and
ii) a step of reacting the resulting hydroxylated polyester with a fatty acid.

Preferably, in any of the processes according to the invention, the molar ratio hydroxy acid/polyol is equal to or larger than 1, more preferably, comprised between 1 and 10, still more preferably, between 3 and 8.

Step i) can comprise a sub-step of heating the polyol and the hydroxy acid at a temperature from 100 to 140°C, more preferably from 110 to 130°C, in order to remove most of the water. This can be also conducted under vacuum to help removing water, such as a vacuum of 200mbar. Then, the temperature is slowly elevated to a first reaction temperature of 150 to 200°C. This elevation of temperature is performed in at least 1 h, preferably at least 2h.

Alternatively, step i) can comprise a sub-step of heating the polyol and the hydroxy acid with suitable solvent and/or in the presence of a metal catalyst, at a temperature from 20 to 140°C, more preferably from 50 to 120°C, in order to remove most of the water. This can be also conducted under vacuum to help removing water, such as a vacuum of 200mbar. Then, the temperature is slowly elevated to a first reaction temperature of 150 to 200°C. This elevation of temperature is performed in at least 1 h, preferably at least 2h.

Step ii) comprises the sub-steps of:
- adding the fatty acid and
- heating the fatty acid and the resulting hydroxylated polyester at a second reaction temperature from 200 to 250°C, preferably from 210 to 240°C. The elevation of temperature is slowly performed, such as in at least 45 min, preferably at least 1h30. Once the second reaction temperature is reached, it is maintained for at least 1h30, preferably, at least 3h.

Alternatively, step ii) can comprise the sub-steps of:
- adding the fatty acid and
- heating the fatty acid and the resulting hydroxylated polyester at a second reaction from 120 to 240°C, preferably from 150 to 230°C with a suitable solvent and/or in the presence of a metal catalyst. The elevation of temperature is slowly performed, such as in at least 45 min, preferably at least 1h30. Once the second reaction temperature is reached, it is maintained for at least 1h30, preferably, at least 3h.

Step ii) can advantageously be performed under atmospheric pressure.

The solvent and the metallic catalyst can be as mentioned above.

As explained above, the polyester according to the invention is particularly suitable for used as a reactive diluent.

The invention thus also concerns a composition comprising the polyester according to the invention and an alkyd resin.

The composition according to the invention has a VOC content below 75%, preferably below 50%, more preferably below 20%.

Advantageously, alkyd resins are selected from the group consisting of long oil and medium oil alkyd resins and modified long oil and medium oil alkyd resins.

By "long oil and medium oil alkyd resins", it is intended alkyd resins with an oil length of 40 to 80 %.

Oil length of an alkyd resin means the number of grams of oil used to produce 100 grams of resin.

By "modified long oil and medium oil alkyd resins", it is more particularly intended polyurethane alkyds, silicone alkyds, styrene alkyds, (meth) acrylic modified alkyds, vinylated alkyds, polyamide modified alkyds, and epoxy esters alkyd resins.

The composition according to the invention is then an air-drying composition, i.e. a composition that forms a solid film by drying/polymerizing on contact with air.

Advantageously, the alkyd resin is preferably a drying alkyd resin or a semi-drying alkyd resin.

By "drying alkyd resin", it is meant an alkyd resin that hardens to a solid film through a chemical reaction with the oxygen of the air (no evaporation of the solvent). Examples are alkyd resins based on linseed oil and/or on tung oil.

By "semi-drying alkyd resin", it is meant an alkyd resin that partially hardens to a solid film through a chemical reaction with the oxygen of the air (no evaporation of the solvent). Examples are alkyd resins based on rapeseed oil, on soybean oil and/or on sunflower oil.

Preferably, the ratio of the polyester according to the invention to the alkyd resin is suitably in the range from 2 to 50: 98 to 50 parts by weight, preferably from 5 to 40: 95 to 60 and more preferably from 10 to 30: 90 to 70 parts by weight.

The composition according to the invention can further comprise one or more of the following ingredients:
- A drying catalyst and optionally a co-drying catalyst and/or an anti-skin agent. A drying catalyst is used to speed up the film formation by oxidation and siccativation. Examples of suitable drying catalysts are salts of (cyclo) aliphatic, natural or synthetic acids, such as, for example, linoleic acid, naphtenic acid, 2-ethyl-hexanoic acid and neodecanoic acid of various metal like cobalt, manganese, iron, lead, zirconium, strontium, aluminium, calcium, barium, bismuth, zinc, lithium and potassium. A co-drying catalyst helps another drying catalyst. Indeed, it is frequent that more than one metal catalyst be used to obtain a complete drying. To suppress the catalytic activity of the primary metal drying catalysts and to preclude untimely oxidation, an anti-skin agent can be also used such as methyl ethyl ketoxime, n-butyl ketoxime and cyclohexane ketoxime may be present in the composition. Examples of suitable anti-skin agents are aminic anti-skin agent, such as diethylhydroxylamine, 2-[(1-methylpropyl)amino]ethanol or phenolic anti-skin agent such as 2-cyclohexylphenol, 4-cyclohexylphenol, 4-tert-amylphenol.
- A solvent. Suitable organic solvents include aliphatic, cycloaliphatic and aromatic hydrocarbons, alcohol ethers, alcohol ether esters, alcohol esters and mixtures thereof. Typical but non-limiting examples are: white spirits, dearomatised white spirits, higher flash point white spirits, isoparafins, butyl glycol, butyl diglycol, propylene glycol mono methyl ether and dipropylene glycol mono methyl ether. Mixtures of solvents may also be used. The solvent is typically present as 5 to 75 wt%, preferably 5 to 50 wt% and more preferably 5 to 20 wt%. However, it may also be an aqueous carrier, including a suitable emulsifier, containing the resin composition in the form of an emulsion.
- A colorant and/ or a pigment. The colorant and/or the pigment can be selected from the inorganic or organic, transparent or non-transparent colorants and/or pigments. Examples are titanium dioxide, iron oxides, carbon black, mixed metal oxides, mono- azo and di-azo pigments, copper phthalocyanines and anthraquinones.
- One or more additives. Examples of such additives are fillers, extenders, substrate wetting agents, anti-sagging agents, anti-oxidants, bactericides, fungicides, insecticides, foam suppressing agents, slip agents, flow and levelling agents, UV-absorbers, HALS-radical scavengers, corrosion inhibitors, matting agents, waxes, flame retardants, loss of dry inhibitors, optical brighteners, dispersing agents, adhesion promoters and anti-crater additives.

Advantageously, the polyester and the alkyd resin of the composition according to the invention are partly derivable from agricultural products, which are evidently from renewable resources.

The composition according to the invention can be prepared by a process comprising a step of mixing the polyester with the alkyd resin.

The process can further comprise a step of dispersing and grinding the resulting mixture with a solvent and at least one drier and optionally an anti-skin agent.

Finally, the present invention also relates to the use of the composition according to the invention as a coating composition.

The coating compositions can be used for coating wood, plastics, leather, textiles, glass, ceramic or metals. They may be applied by any of the known methods, such as spraying, brushing, flooding, casting, dipping and rolling.

Examples of coating compositions are paints, varnishes, lacquers, primers.

The invention is further described in the following examples. It will be appreciated that the invention as claimed is not intended to be limited in any way by these examples.

### Example 1: Preparation of sorbitol sovate (comparative example)

In a suitable reactor with a volume of 1 L, the following ingredients were added. A heated Vigreux column at 95°C is used to remove water but keep reactants in the reactor. A stream of nitrogen keeps the reactor inert at all times.
- 113.9 pbw of an solution of 80% sorbitol in water (Meritol 128, TEREOS)
- 664.2 pbw of soy fatty acid (Radiacid 0202, OLEON NV)

The reactor content is heated to 120°C while decreasing the vacuum to 200mbar. This will remove the water in which the sorbitol was dissolved. After this the reactor is returned to atmospheric pressure and the reactor is slowly in 3 hours heated to 230°C. The reactor mixture is reacted at 230°C for 4 more hours. After this the reactor is cooled to 40°C and the content is filtered with active carbon to remove impurities and color. Fatty acids that still remain are removed by distilling them out of the main ester.

The resulting reactive diluent has the following properties:
Acid value: 1.0 mgKOH/g
Hydroxyl value: 11.2 mgKOH/g
Viscosity at 25°C: 119.1 mPa.s
Iodine value: 136.7 gI₂/100g

### Example 2: Preparation of sorbitol lactate soyate

In a suitable reactor with a volume of 1 L, the following ingredients were added. A heated Vigreux column at 95°C is used to remove water but keep reactants in the reactor. A stream of nitrogen keeps the reactor inert at all times.
- 96.8 pbw (part by weight) of an solution of 80% sorbitol in water (Meritol 128, TEREOS)
- 520.7 pbw of soy fatty acid (Radiacid 0202, OLEON NV)
- 174.0 pbw of an 88% lactic acid solution (Purac ® FCC 88, CORBION)

The reactor content is heated to 120°C while decreasing the vacuum to 200mbar. This will remove the water in which the sorbitol and lactic acid were dissolved. After this the reactor is returned to atmospheric pressure and the reactor is slowly in 4 hours heated to 230°C. The reactor mixture is reacted at 230°C for 4.5 more hours. After this the reactor is cooled to 65°C and the content is filtered with active carbon to remove impurities and color. Fatty acids that still remain are removed by distilling them out of the main ester.

The resulting reactive diluent has the following properties:
Acid value: 1.93 mgKOH/g
Hydroxyl value: 21.0 mgKOH/g
Viscosity at 25°C: 330.9 mPa.s
Iodine value: 115.4 gI₂/100g

### Example 3: Preparation of mannitol lactate soyate

In a suitable reactor with a volume of 1 L, the following ingredients were added. A heated Vigreux column at 95°C is used to remove water but keep reactants in the reactor. A stream of nitrogen keeps the reactor inert at all times.
- 77.4 pbw of D-mannitol (D-Mannitol, 98+%, ACROS Organics™)
- 520.7 pbw of soy fatty acid (Radiacid 0202, OLEON NV)
- 174.0 pbw of an 88% lactic acid solution (Purac ® FCC 88, CORBION)

The reactor content is heated to 120°C while decreasing the vacuum to 200mbar. This will remove the water in lactic acid was dissolved. After this, the reactor is returned to atmospheric pressure and the reactor is slowly in 3 hours heated to 230°C. The reactor mixture is reacted at 230°C for 4 more hours until the hydroxyl value reached a value below 20 mgKOH/g. Then, the reactor is cooled to 70°C and the content is filtered with active carbon to remove impurities and color. Fatty acids that still remain are removed by short path distillation.

The resulting reactive diluent has the following properties:
Acid value: 1.29 mgKOH/g
Hydroxyl value: 8.7 mgKOH/g
Viscosity at 25°C: 324.2 mPa.s
Iodine value: 114.0 gI₂/100g

### Example 4: Preparation of varnishes according to the invention and comparative varnishes

A standard varnish formulation was prepared with each of the reactive diluents of Examples 1 to 3 (indicated by "Example X" in Table 1). Components are added in the order mentioned below in Table 1:

**Table 1: Varnish formulation**

| **Components** | **Product** | **Mass (g)** |
|---|---|---|
| **Resin** | Long oil akyd resin (Radia 6051, OLEON NV) | 76.2 |
| **Anti-skin agent** | 2-butanonoxime (Merck Millipore) | 0.5 |
| **VOC solvent** | White Spirit (D60, Brenntag) | 10.0 |
| **Reactive diluent** | Example X | 10.0 |
| **Drying catalyst** | Octa-Soligen® 155 (OMG Borchers GmbH) | 3.3 |
| | Total | 100 |

The film hardness and drying time were tested on this standard varnish formulation (see Examples 7 and 8 below).

For a reference measurement, 20g of white spirit (and no reactive diluent) were added.

VOC content in the reactive diluent formulations is 100g/L. In the reference formulation without reactive diluent this is 196g/L.

### Example 5: Drying time of varnishes according to the invention and comparative varnishes

Drying time is measured with the Byk drying time recorder according to ASTM method D5895. The tests are carried out over a span of 24h in a temperature controlled environment at 21°C (+/- 2°C). The drying time measured for each formulation is shown in Table 2 below.

The tack-free time (Tf-time) and the dry-through time (Dt-time) were recorded for all varnishes. The Tf-time and the Dt-time are measured in hours and compared to the Tf-time and the Dt-time of the reference (formulation with 20% white spirit). The Tf-time and the Dt-time of the reference is always higher than any other with a reactive diluent.

The relative measurement is calculated as follows:
Dt-time (%) = [(Dt_{reactive diluent} / Dt_{reference}) -1]/100

This evaluation is done based on the dry-through time.

The film thickness applied is 76µm to simulate the worst possible drying conditions for a varnish. Normally varnishes should be applied at a thickness of 20 - 40 µm. Tests are conducted in duplicate.

**Table 2: Tack-free time and drying-through time**

| | Measurement 1 | | | | Measurement 2 | | | |
|---|---|---|---|---|---|---|---|---|
| **Reactive diluent** | Tf-time (h) | Dt-time (h) | Dt-time relative to ref | Ref measurement (Tf / Dt) | Tf-time (h) | Dt-time (h) | Dt-time relative to ref | Ref measurement (Tf / Dt) |
| **Example 1 (comparative)** (sorbitol soyate) | 12.4 | 16.2 | 25% | 8.5/13.0 | 10.3 | 15.5 | 27% | 8.0/12.2 |
| **Example 2** (sorbitol lactate soyate) | 14.4 | 15.6 | 21% | 9.84/12.9 | 14 | 20.4 | 29% | 11.4/15.8 |
| **Example 3** (mannitol lactate soyate) | 14.5 | 15.0 | 16% | 9.84/12.9 | 14.9 | 19.9 | 26% | 11.4/15.8 |

### Example 6: Hardness of varnishes according to the invention and comparative varnishes

The hardness testing is done by the Persoz method. This method measures the dampening of a pendulums movement on the film. The test is carried out according ISO 1522. The harness is measured in seconds and compared to the hardness of the reference (formulation with 20% White Spirit). The hardness of the reference is always higher than any other with a reactive diluent.

Tests are carried out at a constant temperature 21°C (+/- 2°C) and at a relative humidity of 15% - 40%. The results are compared to the reference (formulation with 20% white spirit) to remove environmental influences as much as possible out of the test results.

Therefore the results are reported in Table 3, as a percentage of the film hardness of the reference. Film hardness comes to a maximal value after 14 - 28 days of hardening. The measures were performed at 21 days.

**Table 3: Hardness**

| **Reactive diluent** | Persoz hardness reactive diluent (s) | Persoz hardness reference formulation (s) | Persoz hardness relative to reference |
|---|---|---|---|
| **Example 1 (comparative)** (sorbitol soyate) | 121 | 157 | 77.1% |
| **Example 2** (sorbitol lactate soyate) | 128 | 170 | 75.3% |
| **Example 3** (mannitol lactate soyate) | 134 | 170 | 78.8% |

### Example 7: Preparation of xylitol lactate soyate

In a suitable reactor with a volume of 1 L, the following ingredients were added. A heated Vigreux column at 95°C is used to remove water but keep reactants in the reactor. A stream of nitrogen keeps the reactor inert at all times.
- 64.7 pbw of Xylitol, 99+% (Xylitol,99+%, ACROS Organics™)
- 520.7 pbw of soy fatty acid (Radiacid 0202, OLEON NV)
- 174.0 pbw of an 88% lactic acid solution (Purac ® FCC 88, CORBION)

The reactor content is heated to 120°C while decreasing the vacuum to 200mbar. This will remove the water in lactic acid was dissolved. After this the reactor is returned to atmospheric pressure and the reactor is slowly in 3.5 hours heated to 230°C. The reactor mixture is reacted at 230°C for 3 more hours until the hydroxyl value reached a value below 20 mgKOH/g. After this, the reactor is cooled to 70°C and the content is filtered with active carbon to remove impurities and color. Fatty acids that still remain are removed by short path distillation.

The resulting reactive diluent has the following properties:
Acid value: 0.86 mgKOH/g
Hydroxyl value: 16.8 mgKOH/g
Viscosity at 25°C: 269.7 mPa.s
Iodine value: 117.61 gI₂/100g

### Example 8: Preparation of sorbitol glycolate soyate

In a suitable reactor with a volume of 1 L, the following ingredients were added. A heated Vigreux column at 95°C is used to remove water but keep reactants in the reactor. A stream of nitrogen keeps the reactor inert at all times.
- 96.8 pbw of an solution of 80% sorbitol in water (Meritol 128, TEREOS)
- 522.0 pbw of soy fatty acid (Radiacid 0202, OLEON NV)
- 184.6 pbw of an 70% glycolic acid solution (Glycolic acid, 70%, ACROS Organics™)

The reactor content is heated to 120°C while decreasing the vacuum to 200mbar. This will remove the water in sorbitol and glycolic acid solutions. After this, the reactor is returned to atmospheric pressure and the reactor is slowly in 3.5 hours heated to 230°C. The reactor mixture is reacted at 230°C for 3 more hours until the hydroxyl value reached a value below 20 mgKOH/g. Then, the reactor is cooled to 70°C and the content is filtered with active carbon to remove impurities and color. Fatty acids that still remain are removed by short path distillation.

The resulting reactive diluent has the following properties:
Acid value: 1.35 mgKOH/g
Hydroxyl value: 0.4 mgKOH/g
Viscosity at 25°C: 523.3 mPa.s
Iodine value: 116.4 gI₂/100g

### Example 9: Diluting effect of varnishes according to the invention and comparative varnishes

The diluting effect on the resin has a direct correlation with the viscosity of the reactive diluent. If the reactive diluent is less viscous, the viscosity of the formulation with this reactive diluent will also be lower.

| **Reactive diluent (RD)** | Dynamic viscosity of RD @25°C (mPa.s) | Dynamic viscosity of varnish @25°C (dPa.s) |
|---|---|---|
| **Example 1 (comparative)** (sorbitol soyate) | 121.7 | 21.3 |
| **Example 2** (sorbitol lactate soyate) | 372.1 | 38.29 |
| **Example 3** (mannitol lactate soyate) | 324.2 | 38.40 |
| **Example 7** (xylitol lactate soyate) | 224.5 | 33.24 |
| **Example 8** (sorbitol glycolate soyate) | 523.3 | 42.24 |

### Example 10: Preparation of sorbitol lactate soyate in a 2-step process

In a suitable reactor with a volume of 1 L, the following ingredients were added. A heated Vigreux column at 95°C is used to remove water but keep reactants in the reactor. A stream of nitrogen keeps the reactor inert at all times.
- 96.8 pbw (part by weight) of an solution of 80% sorbitol in water (Meritol 128, TEREOS)
- 174.0 pbw of an 88% lactic acid solution (Purac ® FCC 88, CORBION)

The reactor content is heated to 120°C while decreasing the vacuum to 200mbar. This will remove the water in which the sorbitol and lactic acid were dissolved. After this the reactor is heated up slowly to 180°C in 2.5 hours. The acid value is measured until it reaches 10 mgKOH/g. At this moment the pressure is returned to atmospheric pressure and 520.7 pbw of soy fatty acid (Radiacid 0202, OLEON NV) are added to the reactor. The reactor mixture is heated up further to 230°C in 2 hours and is reacted at 230°C for an additional 4 hours. After this the reactor is cooled to 65°C and the content is filtered with active carbon to remove impurities and color. Fatty acids that still remain are removed by distilling them out of the main ester.

The resulting reactive diluent has the following properties:
Acid value: 0.67 mgKOH/g
Hydroxyl value: 5.8 mgKOH/g
Viscosity at 25°C: 292.2 mPa.s
Iodine value: 115.3 gI₂/100g

## Claims

1. A polyester obtainable by esterification of a polyol with:
a) an hydroxy acid, and
b) a fatty acid.

2. The polyester of claim 1, wherein the molar ratio hydroxy acid/polyol is equal to or larger than 1.

3. The polyester of claim 1 or 2, wherein the fatty acid is a mixture of fatty acids, comprising at least an unsaturated or a polyunsaturated fatty acid.

4. The polyester of any of claim 1 to 3, having a viscosity, at 25°C of less than 1 Pa.s

5. The polyester of any of claims 1 to 4, having an hydroxyl value of less than 100mgKOH/g.

6. The polyester of any of claims 1 to 5, having an acid value of less than 10mgKOH/g.

7. The polyester of any of claims 1 to 6, having an iodine value higher than 80gI₂/100g.

8. A process for preparing a polyester comprising:
- reacting a polyol with an hydroxy acid and a fatty acid in conditions allowing an esterification.

9. A process for preparing a polyester comprising:
i) reacting a polyol with an hydroxy acid to produce an hydroxylated polyester, and
ii) reacting the resulting hydroxylated polyester with a fatty acid.

10. The process of claim 8 or 9, wherein the molar ratio hydroxy acid/polyol is larger than 1.

11. The use of the polyester according to any of claims 1 to 7, as a reactive diluent.

12. A composition comprising the polyester according to any of claims 1 to 7, and an alkyd resin.

13. A process for preparing the composition of claim 12, by mixing the polyester with the alkyd resin.

14. The use of the composition according to claim 12, as a coating composition.
